# EUROPÄISCHE PATENTSCHRIFT

(11) **EP 1 591 758 B1**
(45) Veröffentlichungstag und Bekanntmachung des Hinweises auf die Patenterteilung: **31.10.2007**
(21) Anmeldenummer: 05102667.2
(22) Anmeldetag: 05.04.2005
(51) Int. Cl.: G01D 5/165, G01D 3/08

(54) **Verfahren zum Betreiben eines mechanisch-elektronischen Positionsgebers**
Method for operating a mechanical-electronic position sensor
Procédé de fonctionnement d'un capteur de position mécanique-électronique

(30) Priorität: 10.04.2004 DE 102004017692
(43) Veröffentlichungstag der Anmeldung: 02.11.2005
(73) Patentinhaber: Moeller GmbH, 53115 Bonn (DE)
(72) Erfinder: Völlmar, Guido, D-51063, Köln (DE); Wolff, Bernd, D-53773, Hennef (DE)

(56) Entgegenhaltungen:
- EP-A- 1 463 076
- EP-A- 1 480 239
- DE-A1- 19 962 241
- DE-U1- 20 203 214
- US-A- 5 426 776
- US-A- 5 706 219
- US-B1- 6 463 546

## Beschreibung

Die Erfindung betrifft ein Verfahren zum Betreiben eines mechanisch-elektronischen Positionsgebers nach dem Oberbegriff von Anspruch 1.

Aus der Druckschrift DE 199 62 241 A1 ist ein mechanisch-elektronischer Positionsgeber bekannt, der aus einem Winkelgeber in Form eines Zahngetriebes, von diesem angetriebene Magnetimpulsgeber, einem Analog-Digitalwandler (im Folgenden AD-Wandler genannt), einem Mikroprozessor und einer Ausgangsstufe mit wahlweise digitaler oder analoger Ausganggröße besteht.

Ein mechanisch-elektronischer Positionsschalter ist aus der Gebrauchsmusterschrift DE 202 03 214 U1 bekannt. In einem Gehäuse sind ein Betätigungsstößel, ein Potentiometer, ein Mikrocontroller und elektronische Schaltkontakte angeordnet. Der Betätigungsstößel ist mit dem Schleifer des Potentiometers gekoppelt. Bei Stößelbetätigung wird dem Mikrocontroller ein sich änderndes elektrisches Signal zugeführt, das beim Über- bzw. Unterschreiten eines programmierten Schwellenwertes eine Zustandsänderung der Schaltkontakte bewirkt. Die Schaltkontakte sind ausgangsseitig mit den Anschlussklemmen verbunden. In Anbetracht der beschränkten Zuverlässigkeit für die Kontaktgabe des Schleifers des Potentiometers besteht eine nicht unerhebliche Unsicherheit für die Gültigkeit der Ausgangssignale.

Die Druckschrift EP 0 456 367 A1 offenbart ein Störungen kompensierendes Positionserfassungssystem mit zwei entgegengesetzt gepolten Potentiometern, zwei mit deren Schleifern verbundenen A/D-Wandlern sowie einem Mikrocontroller. Beide Schleifer werden durch ein mechanisches Verbindungsglied simultan bewegt, wobei sich die Schleiferpotenziale im entgegengesetzten Sinne ändern. Die im Allgemeinen mit Störungen beaufschlagten Ausgangssignale der A/D-Wandler werden im Mikrocontroller aufeinanderfolgend einer Additions- und einer Subtraktionsfunktion unterworfen. Daraus ergeben sich Signale, die weitgehend die Verlagerung des Verbindungsgliedes und die die Ausgangsignale beaufschlagenden Störungen abbilden. Neben dem doppelten Aufwand für Potentiometer und A/D-Wandler weist dieses System eine erheblich verringerte Zuverlässigkeit infolge der beiden Potentiometerschleifer auf.

Der Druckschrift DE 198 12 839 A1 ist eine Steuer- und Regeleinrichtung zur Prüfung eines potentiometrischen Sensors zu entnehmen, bei der die Versorgungsspannung der Einrichtung die Außenspannung des potentiometrischen Sensors bildet. Die Druckschrift US 5 706 219 A zeigt eine Interpolationsvorrichtung, bei der ein von einem A/D-Wandler zugeführtes Signal mit einer digitalen Hysterese beaufschlagt wird.

Der Erfindung liegt die Aufgabe zugrunde, ein Verfahren anzugeben, um Ausgangssignale mit verbesserter Zuverlässigkeit zu erhalten.

Ausgehend von einem mechanisch-elektronischen Positionsgeber der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Durch die laufende zweimalige Erfassung des Schleiferpotenzials mit jeweils entgegengesetzter Polung der Außenspannung an den Außenanschlüssen des Potentiometers und dem Vergleich der Summe der beiden Potenzialwerte mit dem Wert des Außenpotenzials selbst, wird ein sicheres Bewertungskriterium für die Gültigkeit des Schleiferpotenzials geschaffen. Bei funktionstüchtigem Potentiometer ist die Summe der beiden Potenzialwerte gleich oder ziemlich gleich dem Wert der Außenspannung. Ein wesentliches Abweichen dieser Summe vom Wert der Außenspannung lässt auf einen Defekt des Potentiometers schließen. Wird ein derartiger Defekt festgestellt, wird die möglicherweise folgenschwere Ausgabe einer fehlerhaften Ausgangsgröße verhindert.

Vorteilhafterweise wird die durch den Mikrocontroller über die Außenanschlüsse des Potentiometers gelegte Außenspannung durch das dem Mikrocontroller zugeführte Versorgungspotenzial und Bezugspotenzial gebildet, d.h., sie ist mit der Versorgungsspannung des Mikrocontrollers identisch. Statt einer fehlerhaften Ausgangsgröße wird zweckmäßigerweise ein Nullwert an der Ausgangsstufe ausgegeben.

Eine vorteilhafte Weiterbildung des Verfahrens besteht darin, erst nach Bestätigung einer wesentlichen Ungleichheit zwischen dem Summenwert und dem Wert des Außenpotenzials durch mehrfacher Wiederholung der zweimaligen Erfassung des Schleiferpotenzials und des nachfolgenden Vergleiches die Ausgabe einer der Position des Betätigungsstößels entsprechenden Ausgangsgröße zu unterlassen. Damit werden zufällige Störungen bei der Erfassung und Verarbeitung des Schleiferpotenzials mit hoher Sicherheit übergangen. Als zweckmäßig hat sich eine bis zu fünfmalige Wiederholung des Vorganges erwiesen. Das Toleranzfenster für zulässige Abweichungen zwischen dem Summenwert und dem Außenpotenzial befindet sich zweckmäßigerweise in der Größenordnung von 5% bezogen auf denjenigen Wertebereich, der dem Gesamthub des Betätigungsstößels entspricht. Im Ergebnis einer verbliebenen Ungleichheit ist es von Vorteil, vom Mikrocontroller ein Fehlermeldesignal, beispielsweise zur Ansteuerung einer im Gehäuse angebrachten LED-Anzeige und/oder eines Fehlermelde-Ausgangs, auszugeben.

Um vorzeitige Verschleißerscheinungen des Potentiometers auszuschließen, beispielsweise infolge von auf den Schleifer des Potentiometers übertragene Schwingungen, ist das Schleiferpotenzial gegenüber der Position des Betätigungsstößels mit einer Hysterese versehen. Zweckmäßig für die Praxis ist eine Hysterese in der Größenordnung von 2 % bezogen auf den Gesamthub des Betätigungsstößels. Die Hysterese wird vorteilhaft durch eine spielbehaftete mechanische Kopplung zwischen dem Betätigungsstößel und dem Schleifer des Potentiometers bewirkt.

Um die Zuverlässigkeit gegenüber kleinen Änderungen elektrischer Werte (zum Beispiel Änderungen der Versorgungsspannung) oder hinsichtlich von Störsignalen zu erhöhen, wird der aus dem Schleiferpotenzial gewonnene digitale Wert softwaremäßig mit einer digitalen Hysterese beaufschlagt. Änderungen des digitalen Wertes führen erst dann zu einer Änderung der Ausgangsgröße, wenn der Schwellenwert um mehr als die Breite der digitalen Hysterese über- bzw. unterschritten wird. Als zweckmäßig hat sich eine Hysterese von etwa ± 0,8 % vom maximal möglichen Digitalwert ergeben. Bei einer Auflösung des digitalisierten Wertes von 8 Bit, vorzugsweise mittels eines 8-Bit-A/D-Wandlers, ergibt sich damit eine Hysterese von ± 2 Digit.

Als elektrische Ausgangsgröße wird zweckmäßigerweise eine elektrische Spannung ausgegeben, die mit 0 V beginnend einen dem auswertbaren Hub des Betätigungsstößels entsprechenden Spannungsbereich überstreicht. Hier wird vorteilhaft bei festgestelltem Defekt des Potentiometers als Bezugswert die Spannung 0 V ausgegeben.

Alternativ zu Vorstehendem wird als elektrische Ausgangsgröße zweckmäßigerweise ein elektrischer Strom ausgegeben, der mit einem endlichen Anfangswert beginnend einen dem auswertbaren Hub des Betätigungsstößels entsprechenden Strombereich überstreicht. Hier wird vorteilhaft bei festgestelltem Defekt des Potentiometers als Bezugswert 0 mA ausgegeben.

Weitere Einzelheiten und Vorteile der Erfindung ergeben sich aus dem folgenden, anhand von Figuren erläuterten Ausführungsbeispiel. Es zeigen
- Figur 1:: die Blockdarstellung eines nach dem erfindungsgemäßen Verfahren betriebenen mechanisch-elektronischen Positionsgebers;
- Figur 2:: die Darstellung des erfindungsgemäßen Verfahrens in einem Flussdiagramm.

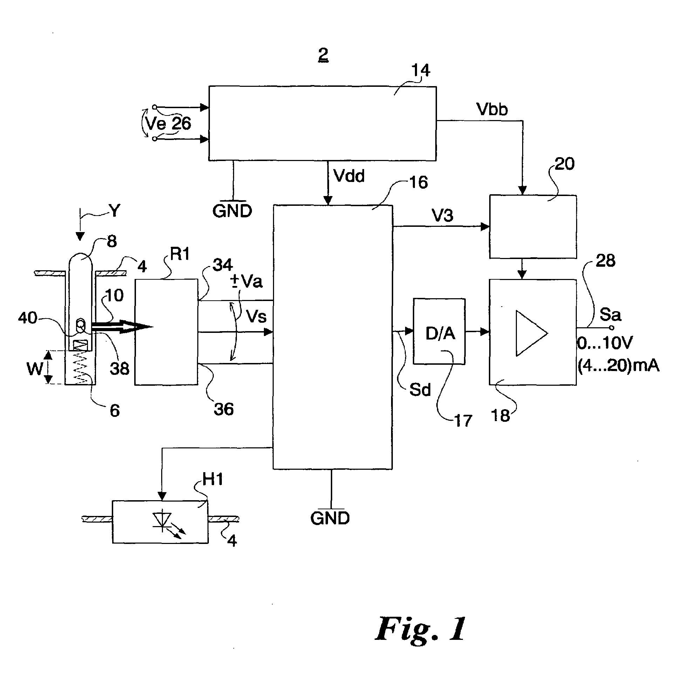

Nach Fig. 1 ist der mechanisch-elektronische Positionsgeber 2 in einem kastenförmigen Gehäuse 4, das allerdings nur rudimentär angedeutet ist, aufgebaut. Als mechanische Komponenten sind in dem Gehäuse 4 ein mit oder entgegen der Federkraft einer Druckfeder 6 in Betätigungsrichtung Y verschiebbarer Betätigungsstößel 8 sowie ein mit diesem gekoppelter Schleifer 10 eines Potentiometers R1 gelagert. Im Gehäuse 4 sind weiterhin übliche Stromversorgungsmittel 14, ein Mikrocontroller 16, ein DA-Wandler 17, eine Ausgangsstufe 18, eine Überwachungseinheit 20 und eine LED-Anzeige H1 angeordnet. Die elektronischen Komponenten sind auf einer Leiterplatte oder auf zwei miteinander verbundenen Leiterplatten befestigt. Über ein Paar erster Anschlussklemmen 26 wird eine Eingangsspannung Ve zugeführt, die durch die Stromversorgungsmittel 14 in ein positives erstes Versorgungspotenzial Vbb und in ein demgegenüber niedrigeres, positives zweites Versorgungspotenzial Vdd gewandelt wird. Die Versorgungspotenziale Vbb und Vdd sind auf das Bezugspotenzial GND (Massepotenzial) bezogen. Die Ausgangsstufe 18 wird über die Überwachungseinheit 20 vom ersten Versorgungspotenzial Vbb und der Mikrokontroller vom zweiten Versorgungspotenzial Vdd versorgt. Um die Einsatzmöglichkeiten des Positionsgebers 2 zu erhöhen, können dem Betätigungsstößel 8 austauschbare Antriebsköpfe vorgesetzt werden.

Die Position des Betätigungsstößels 8 wird auf den Schleifer 10 des Potentiometers R1 übertragen. Am Schleifer 10 steht je nach Position des Betätigungsstößels 8 ein unterschiedlich hohes Schleiferpotenzial Vs an. Das auf das Bezugspotenzial GND zu beziehende Schleiferpotenzial Vs wird vom Mikrocontroller 16 in einen entsprechenden digitalen Wert gewandelt und im Normalfall als Digitalgröße Sd an den DA-Wandler 17 übergeben. Der DA-Wandler 17 übergibt den gebildeten Analogwert an die Ausgangsstufe 18, deren Ausgang einen entsprechenden Analogwert einer Ausgangsgröße Sa über eine zweite Anschlussklemme 28 zur externen Verwendung zur Verfügung stellt. Die Ausgangsstufe 18 ist entweder als steuerbare Spannungsquelle mit einem beispielsweisen Bereich der Ausgangsgröße Sa von 0 V bis 10 V oder als steuerbare Stromquelle mit einem beispielsweisen Bereich der Ausgangsgröße von 4 mA bis 20 mA ausgeführt.

Bei der Erfassung des Schleiferpotenzials Vs wird an die beiden Außenanschlüsse 34 und 36 des Potentiometers R1 eine Außenspannung Va gelegt, die vom Mikrocontroller 16 geliefert wird, wobei der erste Außenanschluss 34 abwechselnd positiv und negativ gegenüber dem zweiten Außenanschluss 36 gepolt ist. Im Wechsel wird vom Mikrocontroller 16 an den ersten Außenanschluss 34 das zweite Versorgungspotenzial Vdd und an den zweiten Außenanschluss 36 das Bezugspotenzial GND bzw. an den ersten Außenanschluss 34 das Bezugspotenzial GND und an den zweiten Außenanschluss 36 das zweite Versorgungspotenzial Vdd angelegt. Damit ergibt sich als Betrag der Außenspannung Va die Differenz zwischen zweiter Versorgungsspannung Vdd und Bezugspotenzial GND.

Der Mikrocontroller 16 gibt bei bestimmten Betriebszuständen unterschiedliche Signale an die LED-Anzeige H1 ab, um Fehler und bestimmte Zustände durch Leuchten oder Blinken zu signalisieren. Die Überwachungseinheit 20 dient zur Überwachung der Funktionsfähigkeit des Mikrocontrollers 16 und enthält eine an sich bekannte Watchdog-Schaltung. Watchdog-Schaltungen sind z.B. aus den Druckschriften US 6 463 546 B1 und US 5 426 776 A bekannt. Bei Fehlfunktionen oder Ausfällen wird ein vom Mikrocontroller 16 ausgegebenes Steuersignal V3 in der Weise geändert, dass über die Überwachungseinheit 20 die Ausgangsstufe 18 deaktiviert wird, sodass es zu keinen fehlerhaften Reaktionen bei den an den Positionsgeber 2 angeschlossenen Einrichtungen kommen kann.

Der Schleifer 10 des Potentiometers R1 greift mit einem Stift 38 in ein kurzes Langloch 40 des Betätigungsstößels 8. Das mechanische Spiel zwischen dem Betätigungsstößel 8 und dem Schleifer 10 beträgt in diesem Beispiel etwa 2 % vom Gesamthub W des Betätigungsstößels 8. Das Schleiferpotenzial Vs ist somit gegenüber der Position des Betätigungsstößels 8 mit einer mechanisch bewirkten Hysterese versehen. Damit wird verhindert, dass zufällige kleine Änderungen der Position des Betätigungsstößels 8, die beispielsweise durch mechanische Schwingungen einer Maschine verursacht werden können, zu störenden Änderungen der Ausgangsgröße Sa und zu einem frühzeitigen Verschleiß des Potentiometers 21 führen.

Das Schleiferpotenzial Vs wird im Mikrocontroller 16 mittels eines A/D-Wandlers von beispielhaft 8 Bit Auflösung in einen digitalen Wert umgewandelt. Bei Änderungen des digitalen Wertes des Schleiferpotenzials Vs, das digitale Werte zwischen 0 und 255 annehmen kann, wird zusätzlich eine digitale Hysterese von beispielhaft ± 2 Digits berücksichtigt. Ein zunehmendes Schleiferpotenzial Vs führt erst beim Überschreiten der digitalen Hysterese durch die zugehörigen Digitalwerte zu einer Änderung der Digitalgröße Sd. In entsprechender Weise führt ein abnehmendes Schleiferpotenzial Vs erst beim Unterschreiten der digitalen Hysterese durch die zugehörigen Digitalwerte zu einer Änderung der Digitalgröße Sd. Die Hysterese von ± 2 Digits bezogen auf den Wertebereich von 255 ergibt eine relative Hysterese von ziemlich genau ± 0,8 %. Diese zusätzlich zu der vorhandenen mechanischen Hysterese eingeführte digitale Hysterese verhindert störende Werteänderungen der Ausgangsgröße Sa infolge von zufälligen kleinen elektrischen Änderungen, insbesondere von kleinen Schwankungen des zweiten Versorgungspotenzials Vdd oder von eingefangenen Störspannungen.

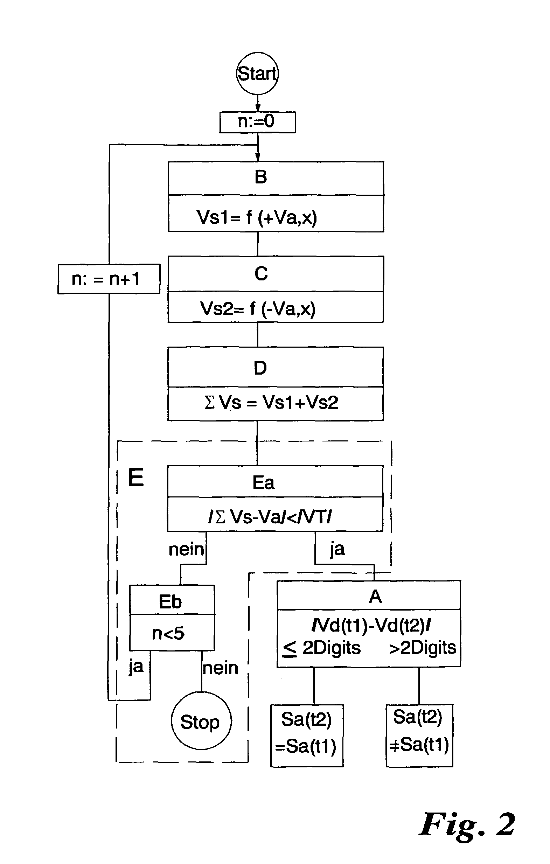

Zur Erläuterung des erfindungsgemäßen Verfahrens zum Betreiben des mechanisch-elektronischen Positionsgebers 2 gemäß Fig. 1 wird im Folgenden auf Fig. 2 Bezug genommen.

Zu Beginn des Verfahrenszyklus wird im Mikrocontroller 16 der Zählerstand n eines internen Zählers auf Null gesetzt. Danach wird in einem Verfahrensschritt B die Außenspannung Va an das Potentiometer R1 angelegt, d.h. mit zweitem Versorgungspotenzial Vdd am ersten Außenanschluss 34 und mit Bezugspotenzial GND am zweiten Außenanschluss 36. Als Schleiferpotenzial wird bei einer beliebigen Schleiferposition x ein digitalisierter Wert Vs1 vom Mikrocontroller 16 erfasst. Unmittelbar darauf wird in einem Verfahrensschritt C die Außenspannung Va am Potentiometer R1 umgepolt, d.h. mit Bezugspotenzial GND am ersten Außenanschluss 34 und mit zweitem Versorgungspotenzial Vdd am zweiten Außenanschluss 36. Als Schleiferpotenzial wird bei der noch gleichen Schleiferposition x ein digitalisierter Wert Vs2 vom Mikrocontroller 16 erfasst. In einem folgenden Verfahrensschritt D wird aus den in den beiden vorangehenden Verfahrensschritten B und C ermittelten Werten Vs1 und Vs2 der Summenwert ΣVs = Vs1 + Vs2 gebildet.

Im einem darauf folgenden Verfahrensschritt E wird der Summenwert mit der Außenspannung Va verglichen. Bei intaktem Potentiometer R1 beträgt in der Schleiferposition x der im Verfahrensschritt C ermittelte Wert des Schleiferpotenzials theoretisch Vs2 = Va - Vs1, das heißt, der Summenwert müsste theoretisch gleich der Außenspannung Va sein. Unter Berücksichtigung systembedingter Toleranzen wird allerdings auf die Nähe zur Gleichheit abgestellt. Gemäß einem ersten Teilschritt Ea wird zwischen dem Summenwert ΣVs und der Außenspannung Va eine zulässig positive oder negative Abweichung festgestellt, die sich innerhalb eines Toleranzfensters VT befindet, das heißt, es ist |ΣVs - Va| < |VT|. Dies gilt als Hinweis für eine fehlerfreie Funktion des Potentiometers R1. Wird dagegen in der Schleiferposition x im Verfahrensschritt C ein Wert für das Schleiferpotenzial von Vs2 ermittelt, der in erheblichem Maße von Va - Vs1 abweicht, dann wird gemäß einem alternativen, zweiten Teilschritt Eb zwischen dem Summenwert ΣVs und der Außenspannung Va eine unzulässig positive oder negative Abweichung festgestellt, die sich außerhalb des Toleranzfensters VT befindet, das heißt, es ist |ΣVs - Va| >= |VT|. Dies gilt als Hinweis für eine Fehlfunktion des Potentiometers R1. Wird beispielsweise als Toleranzfenster VT ein digitaler Bereich von 4 Digits gewählt, dann entspricht das mit einer 8-Bit-AD-Wandlung einer auf den Gesamthub W des Betätigungsstößels 8 bezogenen relativen Abweichung von etwa 1,6 %.

Wird gemäß Teilschritt Ea lediglich eine Abweichung in den zulässigen Grenzen des Toleranzfensters VT festgestellt, wird gemäß einem Verfahrensschritt A das erfasste Schleiferpotenzial Vs als gültig bewertet und zur weiteren Verarbeitung in einen analogen Wert der Ausgangsgröße Sa freigegeben, wobei hier die digitale Hysterese von beispielhaft 2 Digits berücksichtigt wird. Wenn sich die Wertänderung des Schleiferpotenzials Vs(t2) zu einem Bewertungszeitpunkt t2 gegenüber dem zum vorhergehenden Bewertungszeitpunkt t1 festgestellten Schleiferpotenzials Vs(t1) innerhalb der digitalen Hysterese bewegt, dann behält die Ausgangsgröße Sa(t2) zum Bewertungszeitpunkt t2 den Wert der Ausgangsgröße Sa(t1) zur vorangegangenen Bewertungszeitpunkt t1 bei. Im anderen Falle unterscheidet sich die Ausgangsgröße Sa(t2) von der vorangegangenen Ausgangsgröße Sa(t1). Nach der Bewertung des gültigen Schleiferpotenzials Vs nach Verfahrensschritt A erfolgt erneut die Abfrage nach dem Intaktsein des Potentiometers R1 gemäß der Verfahrenschritte B bis E.

Wenn gemäß Teilschritt Eb eine Abweichung außerhalb des Toleranzfensters VT festgestellt wird, dann wird zunächst der Zählerstand n des internen Zählers abgefragt, der sich bei der ersten Feststellung einer Ungleichheit noch auf dem Stand Null befindet. Nach einer Erhöhung des Zählerstandes n um Eins, werden erneut die Verfahrensschritte B bis E durchlaufen. Sollte jetzt lediglich eine zulässige Abweichung gemäß dem Teilschritt Ea festgestellt werden, dann ist davon auszugehen, dass die bei dem vorherigen Durchlauf festgestellte unzulässig große Abweichung zufällig war, sodass die Bewertung des Schleiferpotenzials Vs gemäß Verfahrensschritt A folgt. Sollte allerdings wiederum eine unzulässig große Abweichung gemäß dem Teilschritt Eb festgestellt werden, dann werden unter erneuter Erhöhung des Zählerstandes n um Eins die Verfahrenschritte B bis E nochmals durchlaufen. Bei wiederholter Feststellung einer unzulässig großen Abweichung gemäß Teilschritt Eb erfolgt unter Hinaufsetzung des Zählerstandes die Wiederholung der Verfahrensschritte B bis E erneut. Die vom Teilschritt Eb ausgehende Wiederholung der Verfahrensschritte B bis E kann bis zu fünfmal erfolgen. Wird unter jeweiliger Abfrage des Zählerstandes n nach fünf Wiederholungen jedes Mal eine unzulässig große Abweichung zwischen dem Summenwert ΣVs und dem Wert der Außenspannung Va außerhalb des Toleranzfensters VT festgestellt, ist diese Abweichung nicht mehr zufällig. Als Folge wird keine weitere Wiederholung der Prüfung des Schleiferpotenzials Vs durchgeführt, dagegen unterbleibt die Bewertung des Schleiferpotenzials Vs. Vom Mikrocontroller 16 wird ein Fehlermeldesignal zum periodisch langsamen Blinken an die LED-Anzeige H1 gesendet. Gleichzeitig wird vom Mikrocontroller 16 das Steuersignal V3 und/oder die Digitalgröße Sd so gesetzt, dass die Ausgangsgröße Sa als ungültig erkannt wird. Am Ausgang der Ausgangstufe 18 werden im Falle einer Spannung als Ausgangsgröße Sa dann eine Spannung von 0 V bzw. im Falle eines Stromes als Ausgangsgröße Sa dann ein Strom von 0 mA gemessen.

### Bezugszeichenliste:

- 2: Positionsgeber
- 4: Gehäuse
- 6: Druckfeder
- 8: Betätigungsstößel
- 14: Stromversorgungsmittel
- 16: Mikrocontroller
- 17: AD-Wandler
- 18: Ausgangsstufe
- 20: Überwachungseinheit
- 26; 28: Anschlussklemmen
- 34; 36: Außenanschlüsse
- 38: Stift
- 40: Langloch

- A ... E: Verfahrensschritte
- Ea; Eb: Teilschritte
- GND: Bezugspotenzial
- H1: LED-Anzeige
- n: Zählerstand
- R1: Potentiometer
- Sa: Ausgangsgröße
- Sd: Digitalgröße
- t1; t2: Bewertungszeitpunkte
- V3: Steuersignal
- Va: Außenspannung
- Vbb; Vdd: Versorgungspotenziale
- Ve: Eingangsspannung
- Vs; Vs1; Vs2: Schleiferpotenzial
- VT: Toleranzfenster
- W: Gesamthub
- x: Schleiferposition
- Y: Betätigungsrichtung
- ΣVs: Summenwert

## Patentansprüche

1. Verfahren zum Betreiben eines mechanisch-elektronischen Positionsgebers (2), enthaltend ein Gehäuse (4), ein Betätigungselement, ein vom diesem beaufschlagtes Potentiometer (R1), einen Mikrocontroller (16), eine analoge Ausgangsstufe (18) und Stromversorgungsmittel (14), wobei
A) durch den Mikrocontroller (16) ein der jeweiligen Position des Betätigungselementes entsprechendes, am Schleifer (10) des Potentiometers (R1) anstehendes Schleiferpotenzial (Vs) gegenüber einem Bezugspotential (GND) als Digitalwert erfasst und über einen DA-Wandler als im wesentlichen zum Schleiferpotenzial (Vs) proportionale elektrische Ausgangsgröße (Sa) von der Ausgangstufe (18) ausgegeben wird,
**gekennzeichnet durch** folgende Verfahrensschritte:
B) in der jeweiligen Position des als Betätigungsstößel (8) ausgebildeten Betätigungselementes wird ein erster Wert (Vs1) des Schleiferpotenzials (Vs) vom Mikrocontroller (16) erfasst, währenddem die Außenanschlüsse (34, 36) des Potentiometers (R1) vom Mikrocontroller (16) mit einer Außenspannung (Va) beaufschlagt sind,
C) unmittelbar darauf wird ein zweiter Wert (Vs2) des Schleiferpotenzials (Vs) erfasst, währenddem die Außenanschlüsse (34, 36) vom Mikrocontroller (16) gegenüber Verfahrensschritt B mit verpolter Außenspannung (Va) beaufschlagt sind,
D) worauf aus dem erstem Wert (Vs1) und dem zweiten Wert (Vs2) ein Summenwert (ΣVs) gebildet wird,
E) wird beim Vergleich des Summenwertes (ΣVs) mit dem Wert der Außenspannung (Va)
Ea) lediglich ein Unterschied innerhalb eines festgelegten Toleranzfensters (VT) festgestellt, wird das Verfahren beginnend mit Verfahrensschritt A wiederholt,
Eb) hingegen ein Unterschied außerhalb des Toleranzfensters (VT) festgestellt, wird keine dem Schleiferpotenzial (Vs) entsprechende Ausgangsgröße (Sa) ausgegeben.

2. Verfahren nach vorstehendem Anspruch, **dadurch gekennzeichnet, dass** die Außenspannung (Va) aus dem Versorgungspotenzial (Vdd) und dem Bezugspotenzial (GND) des Mikrocontrollers (16) gebildet wird.

3. Verfahren nach einem der vorstehenden Ansprüche, **dadurch gekennzeichnet, dass** mit dem Teilschritt Eb ein Nullwert an der Ausgangsstufe (18) ausgegeben wird.

4. Verfahren nach einem der vorstehenden Ansprüche, **dadurch gekennzeichnet, dass** ausgehend von dem Teilschritt Eb die Verfahrensschritte B bis E wiederholt werden, bis zu einer vorgegebenen Anzahl von Wiederholungen lediglich ein Unterschied innerhalb des Toleranzfensters (VT) festgestellt und weiter nach Teilschritt Ea verfahren wird oder weiterhin ein Unterschied außerhalb des Toleranzfensters (VT) besteht und keine dem Schleiferpotenzial (Vs) entsprechende Ausgangsgröße ausgegeben wird.

5. Verfahren nach vorstehendem Anspruch, **dadurch gekennzeichnet, dass** etwa bis zu fünf Wiederholungen stattfinden.

6. Verfahren nach einem der vorstehenden Ansprüche, **dadurch gekennzeichnet, dass** das Toleranzfenster (VT) einem einstelligen Prozentbereich bezogen auf den Gesamthub (W) des Betätigungsstößels (8) entspricht.

7. Verfahren nach einem der vorstehenden Ansprüche, **dadurch gekennzeichnet, dass** mit dem Teilschritt Eb vom Mikrocontroller (16) ein Fehlermeldesignal ausgegeben wird.

8. Verfahren nach einem der vorstehenden Ansprüche, **dadurch gekennzeichnet, dass** das Schleiferpotenzial (Vs) gegenüber der Position des Betätigungsstößels (8) mit einer mechanischen Hysterese versehen ist.

9. Verfahren nach vorstehendem Anspruch, **dadurch gekennzeichnet, dass** die mechanische Hysterese etwa ein Zehntel bis ein Viertel des Gesamthubes (W) des Betätigungsstößels (8) beträgt.

10. Verfahren nach einem der beiden vorstehenden Ansprüche, **dadurch gekennzeichnet, dass** ein mechanisches Spiel zwischen dem Betätigungsstößel (8) und dem Potentiometer (R1) vorgesehen ist.

11. Verfahren nach einem der vorstehenden Ansprüche, **dadurch gekennzeichnet, dass** der durch den Mikrocontroller (16) digitalisierte Wert des Schleiferpotenzials (Vs) mit einer digitalen Hysterese beaufschlagt ist.

12. Verfahren nach vorstehendem Anspruch, **dadurch gekennzeichnet, dass** die digitale Hysterese etwa ± 1 % vom maximalen digitalen Wert beträgt.

13. Verfahren nach einem der Ansprüche 1 bis 12, **gekennzeichnet durch** eine elektrische Spannung als Ausgangsgröße (Sa).

14. Verfahren nach einem der Ansprüche 1 bis 12, **gekennzeichnet durch** einen elektrischen Strom als Ausgangsgröße (Sa).

## Claims

1. Method for operating a mechanical-electronic position sensor (2) comprising a housing (4), an actuating element, a potentiometer (R1) acted upon by said actuating element, a microcontroller (16), an analogue output stage (18) and power supply means (14), in which
A) a wiper voltage (Vs) which corresponds to the respective position of the actuating element and is applied to the wiper (10) of the potentiometer (R1) which is detected as a digital value relative to a reference voltage (GND) by the microcontroller (16) and is output by the output stage (18) via a DA converter as an electrical output (Sa) substantially proportional to the wiper voltage (Vs),
**characterised by** the following steps:
B) in the respective position of the actuating element configured as an actuating plunger (8), a first value (Vs1) of the wiper voltage (Vs) is detected by the microcontroller (16), while the microcontroller (16) acts upon the external connections (34, 36) of the potentiometer (R1) with an external voltage (Va),
C) directly thereafter a second value (Vs2) of the wiper voltage (Vs) is determined, while the microcontroller (16) acts upon the external connections (34, 36) with an external voltage (Va) of reverse polarity relative to step B,
D) whereupon a total value (ΣVs) is formed from the first value (Vs1) and the second value (Vs2),
E) if, on comparison of the total value (ΣVs) with the value of the external voltage (Va)
Ea) merely a difference within a fixed tolerance window (VT) is determined, the method is repeated starting from step A,
Eb) if, on the other hand, a difference outside of the tolerance window (VT) is determined, no output (Sa) corresponding to the wiper voltage (Vs) is output.

2. Method according to the preceding claim, **characterised in that** the external voltage (Va) is formed from the supply voltage (Vdd) and the reference voltage (GND) of the microcontroller (16).

3. Method according to either of the preceding claims, **characterised in that** a zero value is output at the output stage (18) in substep Eb.

4. Method according to any one of the preceding claims, **characterised in that**, proceeding from substep Eb, the steps B to E are repeated until, within a predetermined number of repetitions, merely a difference within the tolerance window (VT) is determined, and the process proceeds to substep Ea, or there is still a difference outside the tolerance window (VT) and no output corresponding to the wiper voltage (Vs) is output.

5. Method according to the preceding claim, **characterised in that** there are up to approximately five repetitions.

6. Method according to any one of the preceding claims, **characterised in that** the tolerance window (VT) corresponds to a single-digit percentage relative to the total stroke (W) of the actuating plunger (8).

7. Method according to any one of the preceding claims, **characterised in that** an error message signal is output by the microcontroller (16) in substep (Eb).

8. Method according to any one of the preceding claims, **characterised in that** the wiper voltage (Vs) is provided with a mechanical hysteresis relative to the position of actuating plunger (8).

9. Method according to the preceding claim, **characterised in that** the mechanical hysteresis is approximately a tenth to a quarter of the total stroke (W) of the actuating plunger (8).

10. Method according to either of the two preceding claims, **characterised in that** mechanical clearance is provided between the actuating plunger (8) and the potentiometer (R1).

11. Method according to any one of the preceding claims, **characterised in that** the value of the wiper voltage (Vs) digitised by the microcontroller (16) is acted upon by a digital hysteresis.

12. Method according to the preceding claim, **characterised in that** the digital hysteresis is approximately ± 1 % of the maximum digital value.

13. Method according to any one of claims 1 to 12, **characterised by** an electrical voltage as the output (Sa).

14. Method according to any one of claims 1 to 12, **characterised by** an electrical current as the output (Sa).

## Revendications

1. Procédé d'actionnement d'un capteur de position mécanique-électrique (2), comprenant un boîtier (4), un élément d'actionnement, un potentiomètre (R1) sollicité par celui-ci, un microcontrôleur (16), un étage de sortie analogique (18) et des moyens d'alimentation en courant (14), dans lequel
A) le mi crocontrôleur (16) détecte un potentiel du curseur (Vs) appliqué au curseur (10) du potentiomètre (R1), correspondant à la position respective de l'élément d'actionnement, par rapport à un potentiel de référence (GND), sous forme d'une valeur numérique, l'étage de sortie (18) émettant par l'intermédiaire d'un convertisseur analogique-numérique une valeur de sortie électrique (Sa) essentiellement proportionnelle au potentiel du curseur (Vs);
**caractérisé par** les étapes suivantes du procédé:
B) détection par le microcontrôleur (16) d'une première valeur (Vs1) du potentiel du curseur (Vs) dans la position respective de l'élément d'actionnement ayant la forme d'un coulisseau d'actionnement (8), le microcontrôleur (16) appliquant une tension externe (Va) aux raccordements externes (34, 36) du potentiomètre (R1);
C) immédiatement après, détection d'une deuxième valeur (Vs2) du potentiel du curseur (Vs), le microcontrôleur (16) appliquant aux raccordements externes (34, 36) une tension externe à polarité inversée (Va) par rapport à l'étape B du procédé;
D) formation d'une valeur de somme (ΣVs) à partir de la première valeur (Vs1) et de la deuxième valeur (Vs2);
E) l'étape de comparaison de la valeur de somme (ΣVs) avec la valeur de la tension externe (Va) comprenant les étapes partielles ci-dessous:
Ea) en cas de détermination d'une seule différence dans le cadre d'une fenêtre de tolérance (VT), répétition du procédé en commençant par l'étape A du procédé;
Eb) en cas de détermination d'une différence hors de la fenêtre de tolérance (VT), absence de sortie d'une valeur de sortie (Sa) correspondant au potentiel du curseur (Vs).

2. Procédé selon la revendication précédente, **caractérisé en ce que** la tension externe (Va) est formée à partir du potentiel d'alimentation (Vdd) et du potentiel de référence (GND) du microcontrôleur (16).

3. Procédé selon l'une des revendications précédentes, **caractérisé en ce qu'**une valeur zéro est émise au niveau de l'étage de sortie au cours de l'étape partielle Eb.

4. Procédé selon l'une des revendications précédentes, **caractérisé en ce qu'**en partant de l'étape partielle Eb, les étapes du procédé B à E sont répétées, jusqu'à la détection, après un nombre déterminé de répétitions, d'une seule différence dans le cadre de la fenêtre de tolérance (VT), la procédure étant poursuivie d'après l'étape partielle Ea, ou jusqu'à la détermination d'une différence additionnelle hors de la fenêtre de tolérance (VT), avec absence d'émission d'une valeur de sortie correspondant au potentiel du curseur (Vs).

5. Procédé selon la revendication précédente, **caractérisé en ce qu'**il comprend un maximum d'environ cinq répétitions.

6. Procédé selon l'une des revendications précédentes, **caractérisé en ce que** la fenêtre de tolérance (VT) correspond à un intervalle de pourcentages à un chiffre par rapport à la course totale (W) du coulisseau d'actionnement (8).

7. Procédé selon l'une des revendications précédentes, **caractérisé en ce que** lors de l'étape partielle Eb, le microcontrôleur (16) émet un signal de signalisation d'erreur.

8. Procédé selon l'une des revendications précédentes, **caractérisé en ce que** le potentiel du curseur (Vs) est pourvu d'une hystérésis mécanique par rapport à la position du coulisseau d'actionnement (8).

9. Procédé selon la revendication précédente, **caractérisé en ce que** l'hystérésis mécanique représente environ un dixième à un quart de la course totale (W) du coulisseau d'actionnement (8).

10. Procédé selon l'une des deux revendications précédentes, **caractérisé en ce qu'**un jeu mécanique est établi entre le coulisseau d'actionnement (8) et le potentiomètre (R1).

11. Procédé selon l'une des revendications précédentes, **caractérisé en ce qu'**une hystérésis numérique est appliquée à la valeur du potentiel du curseur (Vs) numérisée par le microcontrôleur (16).

12. Procédé selon la revendication précédente, **caractérisé en ce que** l'hystérésis numérique représente environ ±1% de la valeur numérique maximale.

13. Procédé selon l'une des revendications 1 à 12, **caractérisé en ce que** la valeur de sortie (Sa) est constituée par une tension électrique.

14. Procédé selon l'une des revendications 1 à 12, **caractérisé en ce que** la valeur de sortie (Sa) est constituée par un courant électrique.
